# EUROPÄISCHE PATENTSCHRIFT

(11) **EP 2 583 781 B1**
(45) Veröffentlichungstag und Bekanntmachung des Hinweises auf die Patenterteilung: **25.06.2014**
(21) Anmeldenummer: 11186178.7
(22) Anmeldetag: 21.10.2011
(51) Int. Cl.: B23K 1/00, C21D 9/50, F01D 5/18, B23K 31/02, B23P 15/04, B23K 101/00

(54) **Kombinierter Schweiß-Löt-Prozess zum Verbinden von zwei Komponenten**
Combined welding-soldering process for joining two workpieces
Procédé de soudage-brasage pour joindre deux pièces

(43) Veröffentlichungstag der Anmeldung: 24.04.2013
(73) Patentinhaber: Siemens Aktiengesellschaft, 80333 München (DE)
(72) Erfinder: Piegert, Sebastian, 10777 Berlin (DE)

(56) Entgegenhaltungen:
- WO-A1-2006/076884
- US-A- 5 797 182
- US-A1- 2003 136 811
- US-A1- 2010 074 755

## Beschreibung

Die Erfindung betrifft ein Schweiß- und/oder Lötverfahren zur Herstellung eines Bauteils und Bauteil.

Löt- oder Schweiß-Prozesse zum Verbinden von Bauteilen sind Stand der Technik, wobei Löt-Verbindungen aufgrund der niedrigeren Schmelztemperatur des Lotes gegenüber dem Basismaterial und auch gegenüber Schweißverbindungen meist eine geringere Temperaturfestigkeit aufweisen.

Jedoch können Lötverbindungen auch an schwer zugänglichen Stellen erzeugt werden.

Der Schweißprozess kann nur an leicht zugänglichen Stellen durchgeführt werden.

US 2010/0074755 wird als nächstliegender Stand der Technik angesehen und liegt dem Oberbegriff vom Anspruch 1 zugrunde.

Es ist daher Aufgabe der Erfindung, ein Bauteil aus Komponenten zu erzeugen, die optimal miteinander verbunden sind.

Die Aufgabe wird gelöst durch ein Verfahren gemäß Anspruch 1 und ein Bauteil gemäß Anspruch 5.

In den Unteransprüchen sind weitere vorteilhafte Maßnahmen aufgelistet, die beliebig kombiniert werden können, um weitere Vorteile zu erzielen.

Es zeigen:
- Figur 1 - 4: Schritte des erfindungsgemäßen Verfahrens,
- Figur 5: eine Turbinenschaufel,
- Figur 6: eine Gasturbine,
- Figur 7: eine Liste von Superlegierungen.

Die Figuren und die Beschreibung stellen nur Ausführungsbeispiele der Erfindung dar.

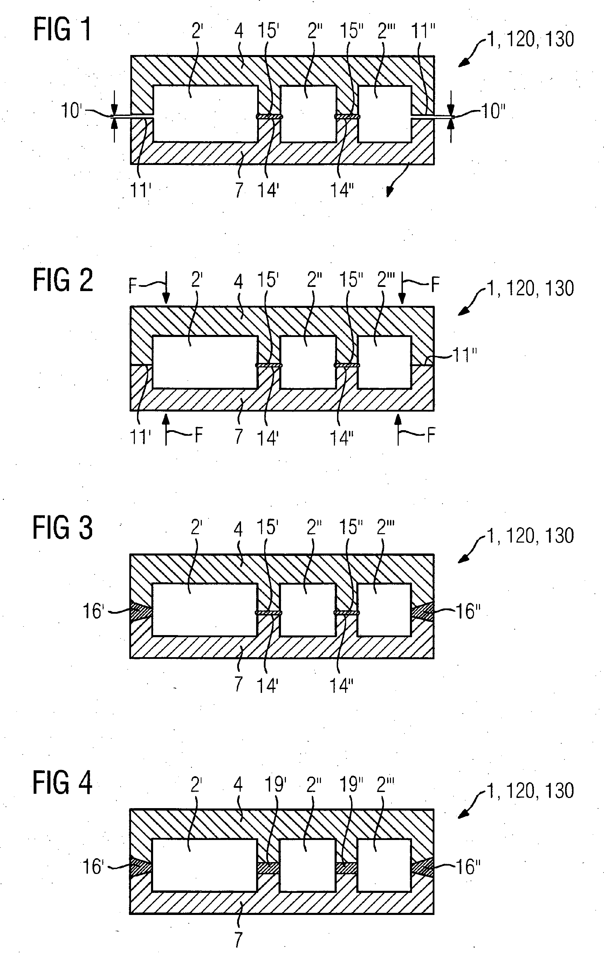

Figur 1 zeigt ein herzustellendes Bauteil 1, 120, 130, das aus zumindest zwei, insbesondere aus nur zwei Komponenten 4, 7 zusammengefügt werden soll.

Das herzustellende Bauteil 1, 120, 130 ist vorzugsweise ein hohles Bauteil 1, 120, 130 mit zumindest einen Hohlraum 2', 2", 2"' und weist von außen zugängliche äußere Kontaktstellen 11', 11", ... auf, aber auch im Innern von außen nicht zugängliche innere Kontaktstellen 14', 14", ... auf denen Komponenten 4, 7 aufeinanderliegend in Kontakt gebracht werden. Auf den inneren Kontaktstellen 14', 14", ... wird ein Lot 15', 15", ... aufgebracht.

Dabei ist vorzugsweise ein Abstand 10', 10", ... im Bereich der äußeren Kontaktstellen 11', 11", ... zwischen den Komponenten 4, 7 vorzusehen, wenn das Lot 15', 15", ... aufgebracht ist.

Die Komponenten 4, 7 werden dann zusammengepresst (F), so dass der Abstand 10', 10", ... gemäß Figur 1 nicht mehr vorhanden ist oder deutlich geringer ist/wird (Fig. 2). Unter Beibehaltung einer Kraft F wird an den äußeren Kontaktstellen eine Schweißstelle oder -naht 16', 16" erzeugt (Fig. 3), so dass die Komponenten 4, 7 schon miteinander verbunden sind.

Die Schweißverbindung 16', 16" kann auch eine durchgehende Schweißnaht sein, die insbesondere um das gesamte Bauteil 1, 120, 130 herumläuft.

Im letzten Schritt gemäß Figur 4 erfolgt eine Wärmebehandlung, so dass erst dann eine Lötverbindung 19', 19" an den inneren Kontaktstellen 14', 14", ... durch das bereits vorhandene Lot 15', 15", ... erzeugt wird.
Somit sind die Komponenten an vielen inneren, äußeren, insbesondere an allen Kontaktstellen 11', 11", 14', 14", ... miteinander verbunden.

Bei den Loten handelt es sich insbesondere um hochschmelzende Lote auf Ni-, Ni-Co-, Pd- oder Au- bzw. Au-Pd-Basis.
Das Lot kann sowohl in Form von Lotpaste als auch als Folie bzw. vorgesintertes Lotblech aufgetragen werden. Es muss je nach Einsatz des Bauteils 1, 120, 130 mit dem Grundwerkstoff der Komponenten 4, 7 kompatibel sein.

Die inneren Lotverbindungen 19', 19", ... erfahren in der Regel, insbesondere bei Turbinenkomponenten 120, 130, eine geringere Temperatur als die äußeren Bereiche, dort wo sich die Schweißverbindungen 16', 16", ... befinden, so dass überall eine ausreichende, gleich hohe Festigkeit gegeben ist.

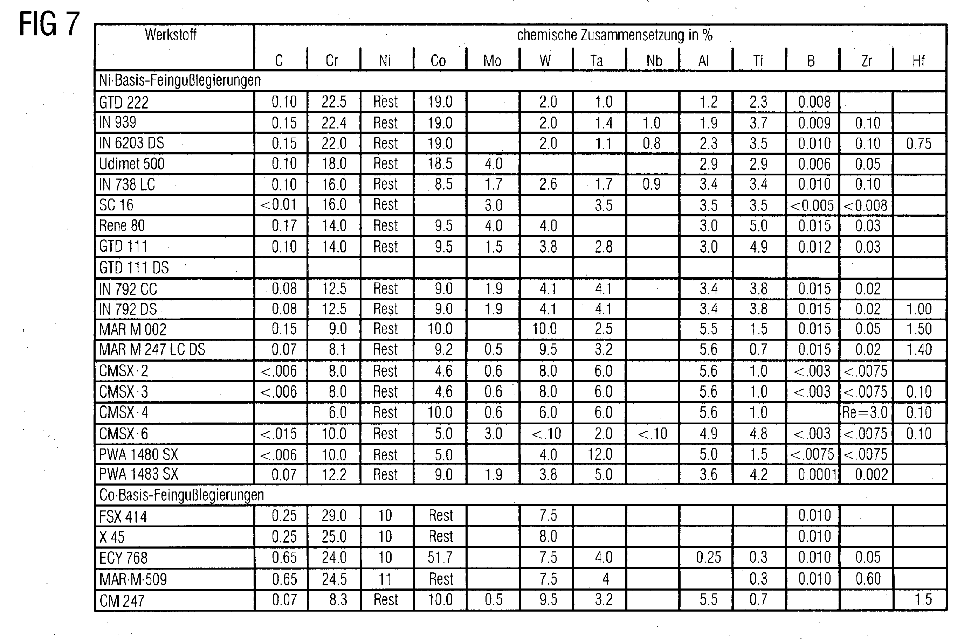

Die Materialien für die Komponenten 4, 7 sind vorzugsweise nickel- oder kobaltbasierte Superlegierungen, insbesondere gemäß Figur 7.

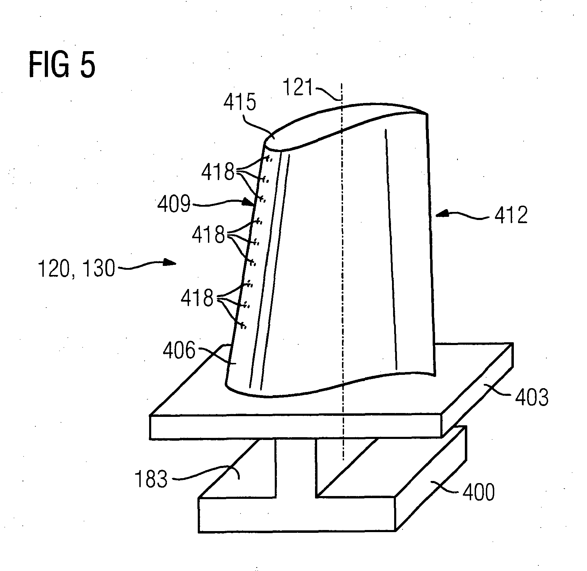

Die Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z.B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8A1-0, 6Y-0, 7Si oder Co-28Ni-24Cr-10A1-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11A1-0, 4Y-2Re oder Ni-25Co-17Cr-10A1-0, 4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

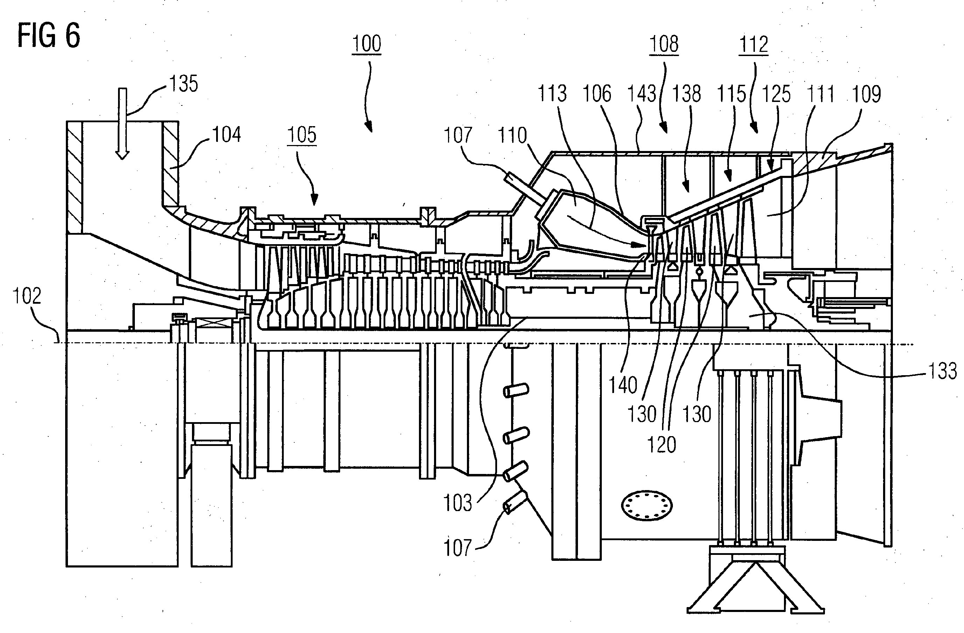

Die Figur 6 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Verfahren zum Verbinden von zumindest zwei Komponenten (4, 7) zu einem Bauteil (1, 120, 130),
bei dem auf innere Kontaktstellen (14', 14", ...) der zumindest einen Komponente (4, 7) ein Lot (15', 15", ...) aufgebracht wird,
dann äußere Kontaktstellen (11', 11", ...) der zumindest zwei Komponenten (4, 7) mittels Schweißverbindungen (16', 16", ...) miteinander verbunden werden, **dadurch gekennzeichnet, dass** eine Kraftwirkung (F) auf die Komponenten (4, 7) vorliegt, während die Komponenten (4, 7) miteinander verschweißt werden, und
in einem letzten Verfahrensschritt eine Wärmebehandlung durchgeführt wird,
so dass dann erst das Lot (15', 15", ...) auf den inneren Kontaktstellen (14', 14", ...) der zumindest zwei Komponenten (4, 7) aufschmilzt und die Komponenten (4, 7) an den inneren Kontaktstellen (14', 14", ...) miteinander verbunden werden.

2. Verfahren nach Anspruch 1,
bei dem ein hohles Bauteil (1, 120, 130) erzeugt wird.

3. Verfahren nach Anspruch 1 oder 2,
bei dem ein Abstand (10', 10", ...) zwischen den Komponenten (4, 7) an den äußeren Kontaktstellen (11', 11", ...) vorhanden ist, wenn das Lot (15', 15", ...) auf den inneren Kontaktstellen (14', 14", ...) aufgebracht wurde.

## Claims

1. Process for joining at least two components (4, 7) to form a structural part (1, 120, 130),
in which process a solder (15', 15", ...) is applied to inner contact sites (14', 14", ...) of the at least one component (4, 7),
then outer contact sites (11', 11", ...) of the at least two components (4, 7) are joined to one another by means of welded joints (16', 16", ...), **characterized in that** a force (F) acts on the components (4, 7) as the components (4, 7) are being welded to one another, and
in a last process step, heat treatment is carried out, such that only then the solder (15', 15", ...) fuses onto the inner contact sites (14', 14", ...) of the at least two components (4, 7) and the components (4, 7) are joined to one another at the inner contact sites (14', 14", ...).

2. Process according to Claim 1,
in which a hollow structural part (1, 120, 130) is produced.

3. Process according to Claim 1 or 2,
in which there is a spacing (10', 10", ...) between the components (4, 7) at the outer contact sites (11', 11", ...) when the solder (15', 15", ...) has been applied to the inner contact sites (14', 14", ...).

## Revendications

1. Procédé de liaison d'au moins deux éléments (4 , 7) en une pièce (1 , 120 , 130),
dans lequel on dépose sur des points (14', 14", ...) intérieurs de contact du au moins un élément (4 , 7) une brasure (15' , 15", ... ),
on relie ensuite entre eux des points (11', 11", ...) extérieurs de contact des au moins deux éléments (4 , 7) au moyen de soudures (16' , 16'", ...), **caractérisé en ce qu'**il y a un effet (F) de force sur les éléments (4,7) pendant que les éléments (4 , 7) sont soudés entre eux et
dans un dernier stade du procédé on effectue un traitement thermique
de manière à ce qu'alors seulement la brasure (15' , 15", ...) sur les points (14', 14", ...) intérieurs de contact des au moins deux éléments (4, 7) fonde et de manière à ce que les éléments (4 , 7) soient reliés entre eux aux points (14' , 14", ...) intérieurs de contact.

2. Procédé suivant la revendication 1, dans lequel on produit une pièce (1 , 120 , 130) creuse.

3. Procédé suivant la revendication 1 ou 2, dans lequel il y a une distance (10' , 10", ...) entre les éléments (4 , 7) aux points (11' , 11", ...) extérieurs de contact lorsque la brasure (15', 15", ...) a été déposée sur les points (14' , 14", ...) intérieurs de contact.
